**Europäisches Patentamt**

**European Patent Office**

**Office européen des brevets**

(19)

(11) Veröffentlichungsnummer : **0 344 246 B1**

(12) # EUROPÄISCHE PATENTSCHRIFT

(45) Veröffentlichungstag der Patentschrift :
06.05.92 Patentblatt 92/19

(51) Int. Cl.⁵ : **F16K 31/10, F16K 11/04**

(21) Anmeldenummer : **88909724.2**

(22) Anmeldetag : **17.11.88**

(86) Internationale Anmeldenummer :
**PCT/DE88/00720**

(87) Internationale Veröffentlichungsnummer :
**WO 89/04935 01.06.89 Gazette 89/12**

(54) **MEHRWEGEVENTIL.**

(30) Priorität : **17.11.87 DE 3739048**

(43) Veröffentlichungstag der Anmeldung :
**06.12.89 Patentblatt 89/49**

(45) Bekanntmachung des Hinweises auf die
Patenterteilung :
**06.05.92 Patentblatt 92/19**

(84) Benannte Vertragsstaaten :
**AT CH DE FR GB IT LI NL**

(56) Entgegenhaltungen :
**FR-A- 2 091 196**
**FR-A- 2 550 602**
**US-A- 2 562 631**
**US-A- 3 683 962**
**US-A- 4 527 590**

(73) Patentinhaber : **BÜRKERT GMBH & CO. WERK
INGELFINGEN
Christian-Bürkert-Strasse 13-17
W-7118 Ingelfingen (DE)**

(72) Erfinder : **NESTLER, Volker
Berlichingen Strasse 61
W-7118 Niedernhall (DE)**
Erfinder : **TILLMANN, Peter
Obere Gartenstrasse 9
W-7113 Neuenstein (DE)**

(74) Vertreter : **Degwert, Hartmut, Dipl.-Phys. et al
Patent Attorneys Prinz, Leiser, Bunke &
Partner Manzingerweg 7
W-8000 München 60 (DE)**

## Beschreibung

Die Erfindung betrifft ein Mehrwegeventil mit wenigstens zwei im Ventilgehäuse gebildeten Ventilsitzen, deren Sitzflächen koplanar oder gegeneinander parallelverschoben sind, und zwei je mit einem dieser Ventilsitze zusammenwirkenden Schließkörpern.

Derartige Mehrwegeventile sind in zahlreichen Bauformen bekannt. Allgemein strebt man eine kompakte Bauform, ein geringes Gewicht, niedrige Herstellungskosten sowie eine geringe Antriebsleistung an. Diese Forderungen widersprechen jedoch einander. Wenn beispielsweise im Interesse niedriger Herstellungskosten mit relativ großen Fertigungstoleranzen gearbeitet wird, so wird eine höhere Antriebsleistung benötigt, um einem aufgrund der Toleranzen erhöhten Hub Rechnung zu tragen oder eine ungenaue Führung des Schließkörpers bezüglich seiner Sitzfläche durch erhöhte Andruckkräfte auszugleichen. Wird im Übertragungsweg zwischen dem Antrieb und dem Betätigungsglied ein Übertragungselement wie eine Schaltwippe oder ein Übertragungshebel verwendet, so tritt zusätzliche, von Verschmutzung und Medium abhängige, undefinierte Reibung auf, die vom Antrieb überwunden werden muß.

Aus der FR-A 2 091 196 ist ein Mehrwegeventil bekannt, bei dem in einem Ventilgehäuse zwei Ventilsitze gebildet sind, deren Sitzflächen koplanar sind. Die mit diesen Ventilsitzen zusammenwirkenden Schließkörper sind an den beiden Enden eines streifenförmigen, starren Betätigungsgliedes angeordnet. Auf seiner von den Ventilsitzen abgewandten Seite ist das Betätigungsglied mit einer elastischen Lamelle verbunden, deren freies Ende am Ventilgehäuse verankert ist. Diese Lamelle bildet im Bereich ihres an das Betätigungsglied angeschlossenen Endes ein Schwenklager für das Betätigungsglied mit einer im Raume nicht festliegenden Schwenkachse, um welche das Betätigungsglied wippenartig zwischen Öffnungs- und Schließstellung verschwenkbar ist. Das Betätigungsglied ist ferromagnetisch ausgebildet und wirkt unmittelbar mit dem Joch eines Elektromagneten zusammen.

Der Erfindung liegt die Aufgabe zugrunde, ein Mehrwegeventil der eingangs angegebenen Art zur Verfügung zu stellen, das sich bei kompakter Bauform, minimaler Anzahl von Einzelteilen und rationeller Herstellbarkeit durch einen geringen Antriebsleistungsbedarf auszeichnet.

Diese Aufgabe wird bei einem Mehrwegeventil der vorstehend angegebenen Art erfindungsgemäß dadurch gelöst, daß die elastische Lamelle im Bereich des einen, starren Endes des Betätigungsgliedes einstückig an dieses angeschlossen und ihr freies Ende in einem an der Bodenfläche des Ventilgehäuses zwischen den Ventilsitzen angeformten zapfenförmigen Vorsprung verankert ist. Durch diese Ausbildung des erfindungsgemäßen Mehrwegeventils ist es gelungen, die an das Mehrwegeventil gestellten, einander widersprechenden Forderungen gleichzeitig zu erfüllen. Die am Ventilgehäuse gebildeten Ventilsitze können mittels eines einzigen Formkernes entformt werden, so daß ihre relative Lage zueinander nur mit geringen Toleranzen behaftet ist. Das Betätigungsglied mit der daran angeschlossenen elastischen Lamelle gestattet nur eine wippenartige Schwenkbewegung zum wechselseitigen Öffnen und Schließen der zwei Ventilsitze. Bewegungen quer zur Schwenkebene und in Längsrichtung des Betätigungsgliedes werden durch die feste Einspannung der elastischen Lamelle am Ventilgehäuse und durch die hohe Formsteifigkeit von Betätigungsglied und elastischer Lamelle in den entsprechenden Richtungen verhindert. Obwohl keine direkte Führung des Betätigungsgliedes und der Schließkörper vorgesehen ist, gelangen letztere stets in gleicher Relativstellung zu den Ventilsitzen in parallele Anlage an der entsprechenden Sitzfläche, so daß ein minimaler, im wesentlichen durch das zu schaltende Medium bestimmter Anpreßdruck zwischen Schließkörpern und Sitzflächen ausreicht. Übertragungselemente zwischen dem Antrieb und dem Betätigungsglied können entfallen, so daß entsprechende Reibungsverluste vermieden werden. Der Öffnungshub der Schließkörper ist bei Serienfertigung mit nur geringen Toleranzen behaftet, die bei der Dimensionierung des Antriebs keine besondere Berücksichtigung finden müssen. Da das Betätigungsglied und die Lamelle einstückig hergestellt werden können, reduziert sich die Anzahl von benötigten Bauteilen, abgesehen von dem Antrieb, auf lediglich zwei Elemente, nämlich das Ventilgehäuse mit den daran gebildeten Ventilsitzen und das einstückige Betätigungsglied mit elastischer Lamelle sowie den an den Enden des Betätigungsgliedes befestigten Schließkörpern. Die Montage ist überaus einfach, da lediglich das freie Ende der elastischen Lamelle am Ventilgehäuse verankert werden muß.

Zur Erfindung gehören zahlreiche Weiterbildungen des oben erläuterten Erfindungsgedankens. Diese Weiterbildungen sind in den Unteransprüchen angegeben. Von besonderem Vorteil sind Ausführungsformen, bei welchen das Betätigungsglied zumindest über den größten Teil seiner Länge starr ausgebildet ist, so daß die zur wippenartigen Schwenkbewegung erforderliche Deformierung nahezu ausschließlich im Bereich der elastischen Lamelle auftritt. Bei dieser wippenartigen Schwenkbewegung tritt eine komplexe, nur mit großem Aufwand theoretisch vorhersagbare Verformung der elastischen Lamelle und Bewegung des Betätigungsgliedes auf. Wenn die elastische Verformung aber überwiegend im Bereich der elastischen Lamelle auftritt, läßt sich die Bewegungsbahn des Betätigungsgliedes leichter im voraus so berechnen, daß gewährleistet ist, daß die Oberfläche der Schließkörper jeweils parallel zur entsprechenden Sitzfläche auf dieser zur Anlage kommt.

Besonders hervorzuheben sind Ausführungsformen, bei denen die Steifigkeit des Betätigungsgliedes durch eine längsverlaufende Aufkantung an den Seitenrändern oder in Form einer mittleren Rippe bewirkt wird. Die elastische Lamelle und das Betätigungsglied können dann gemeinsam aus einem Blech ausgestanzt werden, das die für die Lamelle gewünschten Elastizitätswerte aufweist, denn im Bereich der Aufkantung wird eine Verformung weitgehend vermieden.

Von besonderem Vorteil sind auch Ausführungsformen, bei welchen einer der beiden Schließkörper durch die Federkraft der elastischen Lamelle gegen die entsprechende Sitzfläche beaufschlagt ist. Im antriebslosen Zustand ist dann der entsprechende Ventilsitz geschlossen. Zum Öffnen dieses Ventilsitzes und Schließen des anderen Ventilsitzes greift der Antrieb vorzugsweise drückend am Betätigungsglied an, indem eine Druckkraft an einer dem betreffenden Schließkörper benachbarten Stelle des Betätigungsgliedes in Richtung der Schließbewegung ausgeübt wird. Es ist somit im unbetätigten Zustand keinerlei formschlüssige oder kraftschlüssige Verbindung zwischen dem Antrieb und dem Betätigungsglied erforderlich.

Da das erfindungsgemäße Mehrwegeventil einen sehr geringen Antriebsleistungsbedarf aufweist, kann der Antrieb entsprechend klein dimensioniert werden. Insbesondere ist es möglich, diesen Antrieb mit dem Betätigungsglied bzw. der elastischen Lamelle zu kombinieren. Besonders vorteilhaft ist eine Ausführungsform, bei welcher mit der elastischen Lamelle ein Bimetallstreifen, ein Streifen aus piezoelektrischem Material oder ein Streifen aus temperaturabhängig verformbarem Material kombiniert ist. Ein solcher Antrieb benötigt zu seiner Unterbringung keinen zusätzlichen Raum, so daß überaus kompakte Mehrwegeventile geschaffen werden können.

Gegenstand der Erfindung ist ferner ein Mehrwegeventil mit wengistens zwei im Ventilgehäuse gebildeten Ventilsitzen, die koplanar oder gegeneinander parallel verschoben sind, und jeweils einem zugehörigen Schließkörper sowie einem Betätigungsglied, das zwischen einem Ventilantrieb und den Schließkörpern angeordnet ist; ein Mehrwegeventil dieser Art ist bereits aus der US-A-2 562 631 bekannt. Bei diesem Mehrwegeventil ist das Ventilgehäuse durch eine Membran in einen ersten Abschnitt, in dem die Ventilsitze gelegen sind, und einen zweiten Abschnitt, in dem sich der Ventilantrieb und das Betätigungsglied befinden, unterteilt; die Schließkörper sind dem jeweils zugehörigen Ventilsitz gegenüberliegend an der Membran angeordnet und mit dieser verbunden. Ferner ist jeder Schließkörper über eine Kopplungseinrichtung mit dem Betätigungsglied verbunden. Von einem solchen Mehrwegeventil ausgehend besteht die erfindungsgemäße Ausbildung darin, daß das Betätigungsglied aus einer elastischen Lamelle gebildet ist, an deren freie Enden jeweils eine der Kopplungseinrichtungen angeschlossen ist und die über einen am Ventilgehäuse festgelegten Lamellenabschnitt wippenartig gelagert ist, und daß einer der Schließkörper durch die Federkraft der Lamelle gegen die Sitzfläche des entsprechenden Ventilsitzes beaufschlagt ist, Vorteilhafte Weiterbildungen dieses Mehrwegeventils sind in den Ansprüchen 17 und 18 angegeben.

Weiterhin wird durch die Erfindung ein 4/2-Wege-Ventil mit vier Ventilsitzen und zugehörigen Schließkörpern geschaffen, bei welchem die Schließkörper durch einen gemeinsamen Ventilantrieb paarweise betätigt werden und welches dadurch gekennzeichnet ist, daß je zwei Schließkörper an den beiden Enden eines von zwei jeweils als elastische Lamelle aus'gebildeten Betätigungsgliedern angeordnet sind, die einen am Ventilgehäuse festgelegten Lamellenabschnitt aufweisen, durch den das Betätigungsglied wippenartig gelagert ist, und daß das erste der beiden Betätigungsglieder auf der Seite des Ventilantriebs angeordnet und durch diesen betätigbar ist, während das zweite Betätigungsglied über eine Kopplungseinrichtung an das erste Betätigungsglied angeschlossen und über dieses betätigbar ist.

Vorteilhafte Weiterbildungen dieser Ausführungsform sind in den Ansprüchen 20 bis 29 angegeben.

Weitere Vorteile und Merkmale der Erfindung ergeben sich aus der folgenden Beschreibung mehrerer Ausführungsformen der Erfindung und aus der Zeichnung, auf die Bezug genommen wird. In der Zeichnung zeigen:

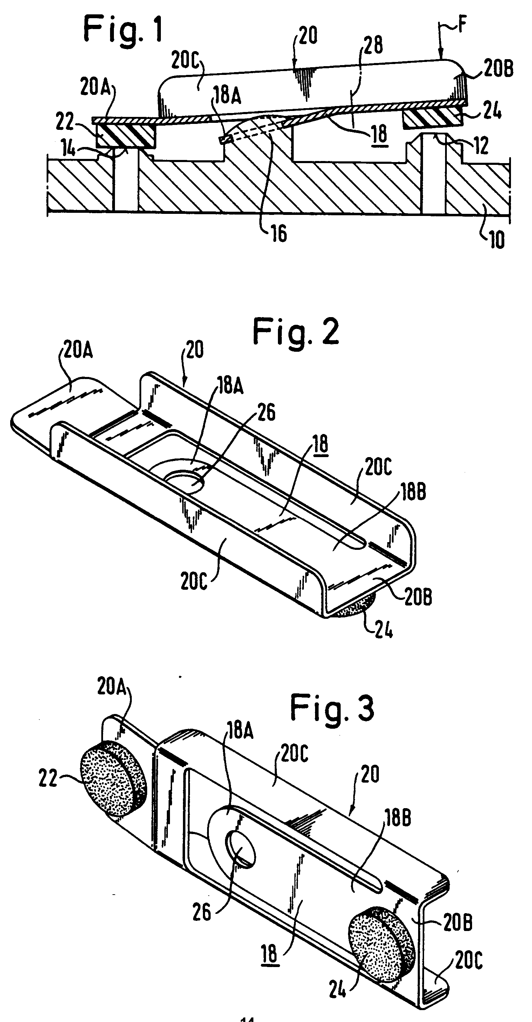

Fig. 1 eine schematische Schnittansicht der Funktionsteile einer ersten Ausführungsform des Mehrwegeventils im antriebslosen Zustand;

Figl 2 eine Perspektivansicht eines Betätigungsgliedes für die in Fig. 1 gezeigte Ausführungsform;

Fig. 3 eine andere Perspektivansicht desselben Betätigungsgliedes;

Fig. 4 eine Ansicht analog Fig. 1, die jedoch die Funktionsteile im betätigten Zustand zeigt;

Fig. 5 eine schematische Schnittansicht der in den vorangehenden Figuren gezeigten Ausführungsform, jedoch mit Antrieb;

Fig. 6 und 7 zwei Perspektivansichten einer weiteren Ausführungsform des Betätigungsgliedes aus unterschiedlichen Richtungen;

Fig. 8 und 9 Perspektivansichten einer weiteren Ausführungsform des Betätigungsgliedes aus verschiedenen Richtungen;

Fig. 10 eine Ausführungsform, bei welcher der Antrieb in die elastische Lamelle integriert ist;

Fig. 11, 12 und 13 Perspektivansichten eines Flachankers nach einer vorteilhaften Weiterbildung;

Fig. 14 eine schematische Schnittansicht durch Ventilgehäuse und einen Teil der durch eine Membran abgetrennten Antriebsseite bei einer weiteren Ausführungsform; und

Fig. 15 eine Schnittansicht durch das Ventilgehäuse bei einer weiteren Ausführungsform, die ein 4/2-Wege-Ventil bildet.

In Fig. 1 ist von dem Ventilgehäuse 10 nur der Boden gezeigt. An den Boden des Ventilgehäuses 10 sind zwei Ventilsitze 12, 14 angeformt. Die Sitzflächen dieser Ventilsitze 12, 14 sind zueinander parallel und auf gleicher oder geringfügig unterschiedlicher Höhe angebracht. Zwischen den beiden Ventilsitzen 12, 14 ist an die Bodenfläche des Ventilgehäuses 10 ein zapfenförmiger Vorsprung 16 angeformt. In diesem Vorsprung 16 ist das freie Ende 18A einer elastischen Lamelle 18 verankert. Wie besonders anschaulich aus den Figuren 2 und 3 hervorgeht, schließt diese elastische Lamelle 18 mit ihrem anderen Ende 18B an den einen Endbereich eines Betätigungsgliedes 20 an, das als gestrecktes Teil mit im wesentlichen U-förmigem Profil ausgebildet ist und an seinen beiden Enden je einen Schließkörper 22, 24 trägt. Der Endbereich 20A, an welchem der Schließkörper 22 befestigt ist, bildet einen lamellenartigen, leicht abgekröpften Fortsatz. Zwischen diesem Endbereich 20A und dem anderen Endbereich 20B, welcher dem Schließkörper 24 benachbart ist, ist das Betätigungsglied 20 aufgrund seiner durch seitliche Aufkantungen gebildeten U-Profilform im wesentlichen starr und unter den im Betrieb auftretenden Kräften unverformbar. Zur Verankerung des Endes 18A der elastischen Lamelle 18 an dem zapfenförmigen Vorsprung 16 ist im Bereich dieses Endes 18A eine runde Öffnung 26 gebildet, durch die eine Formschlußverbindung ermöglicht wird. Wie aus Fig. 1 ersichtlich, ist die elastische Lamelle 18 von der Ebene des Betätigungsgliedes 20 ausgehend geringfügig zu seiner Verankerungsstelle am Vorsprung 16 hin geneigt. In dem in Fig. 1 gezeigten Zustand befindet sich die elastische Lamelle 18 unter einer geeigneten Vorspannung, um den Schließkörper 22 in Anlage an der Sitzfläche des Ventilsitzes 14 zu halten. Die Vorspannkraft der durch die elastische Lamelle 18 gebildeten Feder ist so dimensioniert, daß der Schließkörper 22 mit der erforderlichen Kraft gegen die zugehörige Sitzfläche gedrückt wird, um bei den zu schaltenden Mediendrücken die Dichtigkeit zu gewährleisten.

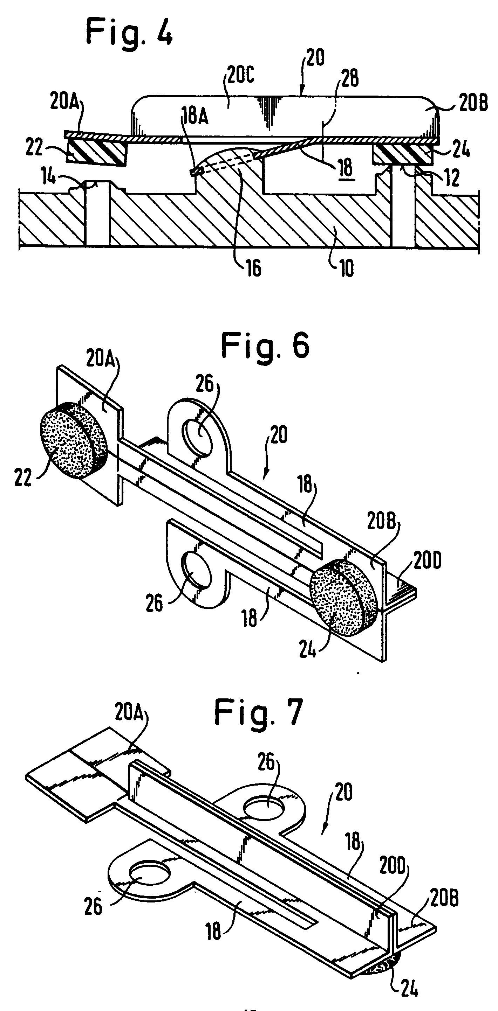

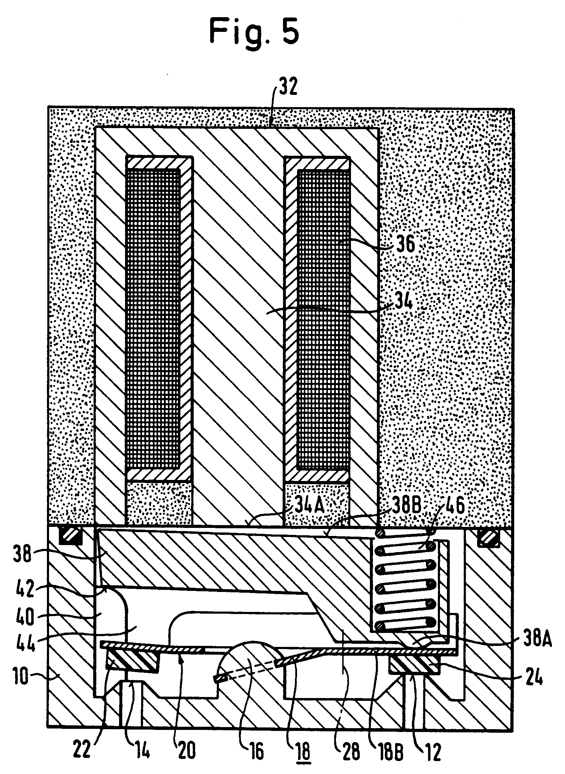

Wird nun auf den Endbereich 20B des Betätigungsgliedes 20 eine Betätigungskraft F (Fig. 1) ausgeübt, so gelangt das Betätigungsglied 20 in die in Fig. 4 gezeigte Stellung. Hierzu führt es eine Schwenkbewegung nach Art einer Wippe um eine gedachte Schwenkachse 28 aus. Diese materiell nicht vorhandene Schwenkachse 28 liegt im Raum nicht fest, sondern wird bei der Verschwenkung des Betätigungsgliedes 20 translatorisch geringfügig verlagert. Die genaue Bewegungsbahn der Schwenkachse 28 ist mathematisch kaum zu beschreiben und hängt von der Elastizität und Formgebung der elastischen Lamelle 18 sowie des Übergangsbereichs zwischen dieser und dem als starr angenommenen Betätigungsglied 20 ab. Eine gewisse elastische Verformung kann jedoch auch im Bereich des Betätigungsgliedes 20 auftreten, insbesondere an seinem lamellenförmigen, geringfügig abgekröpften Endbereich 20A. Unter der Wirkung der Betätigungskraft F gelangt der Schließkörper 24 an der zugehörigen Sitzfläche des Ventilsitzes 12 dichtend zur Anlage. Durch die wippenartige Schwenkbewegung des Betätigungsgliedes 20 wird gleichzeitig der Schließkörper 22 von der Sitzfläche des Ventilsitzes 14 abgehoben. Der Abkröpfwinkel des lamellenförmigen Endbereichs 20A und die Parallelversetzung der Dichtflächen der beiden Ventilsitze 12 und 14 sind so bemessen, daß die Schließkörper 22, 24 jeweils parallel auf der zugehörigen Sitzfläche zur Anlage kommen. Ungleichmäßige Verformungen der Schließkörper 22, 24 werden daher vermieden, was dazu beiträgt, die Hubtoleranzen gering zu halten.

Aus den Figuren 2 und 3 ist unmittelbar ersichtlich, daß das Betätigungsglied 20 mit der elastischen Lamelle 18 aus demselben Flachmaterial, insbesondere Metallblech, ausgestanzt werden kann. Nach Freistanzen der elastischen Lamelle 18 und des lamellenförmigen Endbereiches 20A werden die seitlichen Ränder 20C rechtwinklig aufgekantet. Anschließend werden die Schließkörper 22, 24 an den beiden Enden des Betätigungsgliedes 20 in herkömmlicher Weise befestigt. Zur Einspannung des Betätigungsgliedes 20 am Ventilgehäuse 10 wird das Ende 18A der elastischen Lamelle 18 an den Vorsprung 16 durch nietartiges Verpressen oder Einformen oder durch Verschrauben befestigt.

Bei der Ausführungsform nach den Figuren 6 und 7 sind zwei elastische Lamellen 18 vorgesehen, die sich vom Endbereich 20B des Betätigungsgliedes 20 in seitlichem Abstand von den Längsseiten des Betätigungsgliedes 20 erstrecken. Die Starrheit des Betätigungsgliedes 20 zwischen seinen Endbereichen 20A und 20B ist durch eine mittlere Längsrippe 20D hergestellt, die wie bei der Ausführungsform nach den Figuren 1 bis 4 durch eine Aufkantung gebildet ist. Auch bei dieser Ausführungsform sind das Betätigungsglied 20 und die elastischen Lamellen einstückig, jedoch werden sie aus zwei seitlich aneinandergesetzten, rechtwinklig aufgekanteten Stanzteilen gebildet. Ferner ist bei dieser Ausführungsform der Boden des Ventilgehäuses 10 mit zwei Vorsprüngen von der Art des in den Figuren 1 bis 4 gezeigten Vorsprungs 16 versehen, um beide elastischen Lamellen 18 am Ventilgehäuse einzuspannen. Durch diese doppelte Einspannung ergibt sich eine besonders präzise Führung des Betätigungsgliedes 20, insbesondere weil einer Verdrehung um die Längsachse vorgebeugt wird.

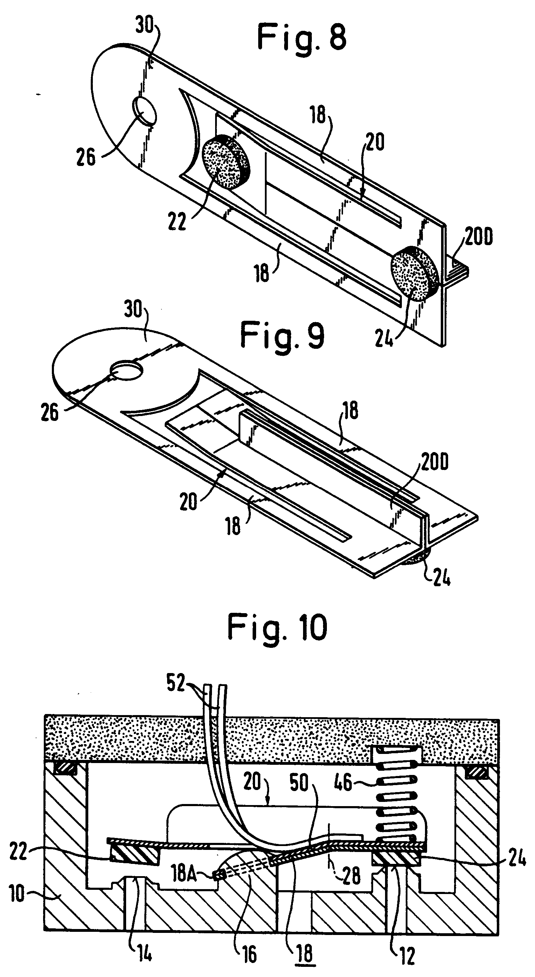

Bei der in den Figuren 8 und 9 gezeigten Ausführungsform sind gleichfalls zwei seitlich angeordnete elastische Lamellen 18 vorhanden. Diese Lamellen 18 bilden die Längsseiten eines rechteckigen Rahmens, welcher das Betätigungsglied 20 umgibt. Dieses Betätigungsglied 20 ist von gleicher Form wie bei der Ausführungsform nach den Figuren 6 und 7 und wird daher nicht erneut beschrieben. Während bei den bisher beschriebenen Ausführungsformen die Verankerungsstelle der elastischen Lamelle 18 zwischen den beiden Ventilsitzen 12, 14 liegt, ist bei der Ausführungsform nach den Figuren 8 und 9 die Verankerungsstelle an einem seitlichen Fortsatz 30 des rechteckigen Rahmens gebildet, dessen Längsseiten die elastischen Lamellen 18 bilden. Dieser Fortsatz 30 weist eine Öffnung 26 auf, die auf derselben Längsachse wie die Schließkörper 22, 24 liegt, jedoch nicht zwischen diesen, sondern auf der vom Schließkörper 24 abgewandten Seite des Schließkörpers 22. Bei dieser Ausführungsform haben die elastischen Lamellen 18 eine vergleichsweise große Länge, da sie sich bis zu dem dem Schließkörper 24 benachbarten Endbereich des Betätigungsgliedes 20 erstrecken. Durch diese Ausführungsform werden relativ große Schalthübe ermöglicht.

Bei der Ausführungsform nach Fig. 5 ist als Antrieb eine Elektromagneteinheit 32 auf das offene Ende des Ventilgehäuses 10 aufgesetzt. Die Elektromagneteinheit 32 besteht aus einem E-förmigen Magnetjoch 34, einer auf dessen mittleren Schenkel aufgesetzten Spule 36 und einem in das Ventilgehäuse 10 eingelegten Klappanker 38. Der Klappanker 38 ruht an seinem einen Ende auf einem an eine Seitenwand des Ventilgehäuses 10 angeformten Sockel 40 und bildet dort durch bloßes Aufliegen ein Schwenklager 42. Der Klappanker 38 ist in einer schlitzförmigen Tasche 44 des Ventilgehäuses 10 mit Spiel aufgenommen. Die Funktionsteile des Mehrwegeventils stimmen mit der in den Figuren 1 bis 4 gezeigten Ausführungsform überein und werden daher nicht erneut beschrieben. Durch eine in eine Bohrung des Klappankers 38 eingesetzte Schraubenfeder 46 wird das dem Schließkörper 24 benachbarte Ende des Klappankers 38 über einen angeformten Druckansatz 38A gegen den dem Schließkörper 24 benachbarten Endbereich des Betätigungsgliedes 20 gedrückt, um den Schließkörper 24 in Dichtanlage an der Sitzfläche des Ventilsitzes 12 zu halten. Das Betätigungsglied 20 nimmt dabei die in Fig. 4 gezeigte, betätigte Stellung ein, die dem Ruhezustand des Elektromagnetantriebs 32 entspricht. In diesem Zustand ist ein keilförmiger Spalt zwischen den einander zugewandten Flächen 34A und 38A des E-förmigen Magnetjochs 34 bzw. des Klappankers 38 gebildet. Bei Erregung der Spule 36 wird der Klappanker 38 entgegen der Kraft der Schraubenfeder 46 angezogen, so daß sich der Druckansatz 38A von dem Betätigungsglied 20 entfernt. Das Betätigungsglied 20 nimmt dann den in Fig. 1 gezeigten Ruhezustand ein, in welchem der Schließkörper 22 dichtend auf der Sitzfläche des Ventilsitzes 14 aufliegt.

Die bei der Ausführungsform nach Fig. 5 gewählte drückende Betätigung durch den Elektromagnetantrieb 32 ist von besonderem Vorteil, weil die Federkraft der elastischen Lamelle 18 der Federkraft der Schraubenfeder 46 entgegengesetzt wirkt und somit in der Anfangsphase der Anzugsbewegung des Klappankers 38 diese Anzugsbewegung unterstützt, um so die benötigte Antriebsleistung weiter zu reduzieren. Von besonderem Vorteil ist die drückende Betätigung auch wegen des Entfallens jeglicher form- oder kraftschlüssiger Verbindung zwischen dem Betätigungsglied 20 und dem Antrieb im unbetätigten Zustand dieses Betätigungsgliedes (Fig. 1).

Bei der Ausführungsform nach Fig. 10 werden wiederum die Funktionsteile nach der Ausführungsform der Figuren 1 bis 4 verwendet. Jedoch ist abweichend von der in Fig. 5 gezeigten Ausführungsform der Antrieb mit der elastischen Lamelle 18 kombiniert. Auf die elastische Lamelle 18 ist ein Streifen 50 aufgesetzt, der den Antrieb des Mehrwegeventils bildet. Dieser Streifen 50 kann ein Bimetallstreifen sein oder mit der elastischen Lamelle 18 einen Bimetallstreifen bilden. Bei einer solchen Ausführungsform wird das Bimetallelement elektrisch über zwei nach außen geführte Leitungen 52 beheizt. Bei Stromfluß erwärmt sich das Bimetallelement und verändert seine Form, um das Betätigungsglied 20 aus seiner einen Stellung in die andere zu bewegen. Bei der in Fig. 10 gezeigten Ausführungsform wird das dem Schließkörper 24 benachbarte Ende des Betätigungsgliedes 20 durch eine Schraubenfeder 46, die sich an ihrem einen Ende am Deckel des Ventilgehäuses 10 abstützt, gegen den Ventilsitz 12 beaufschlagt, so daß dieser Ventilsitz im Ruhezustand des Bimetallelements durch den Schließkörper 24 verschlossen wird. Bei Beheizung des Bimetallelements verformt sich dieses mit der elastischen Lamelle 18 entgegen der Wirkung der Schraubenfeder 46, um den Schließkörper 22 in Anlage an die Sitzfläche des Ventilsitzes 14 zu bringen und den Schließkörper 24 vom Ventilsitz 12 abzuheben.

Der Streifen 50 kann auch aus einem piezoelektrischen Material hergestellt werden, das sich unter der Wirkung einer angelegten Spannung verformt. Weiterhin kann der Streifen 50 aus einem Material bestehen, das sich temperaturabhängig unter Ausnutzung von Memory-Kristallisationseffekten verformt.

Als Antriebe kommen auch Hubankermagnete sowie pneumatische Membran- oder Kolbenantriebe in Frage.

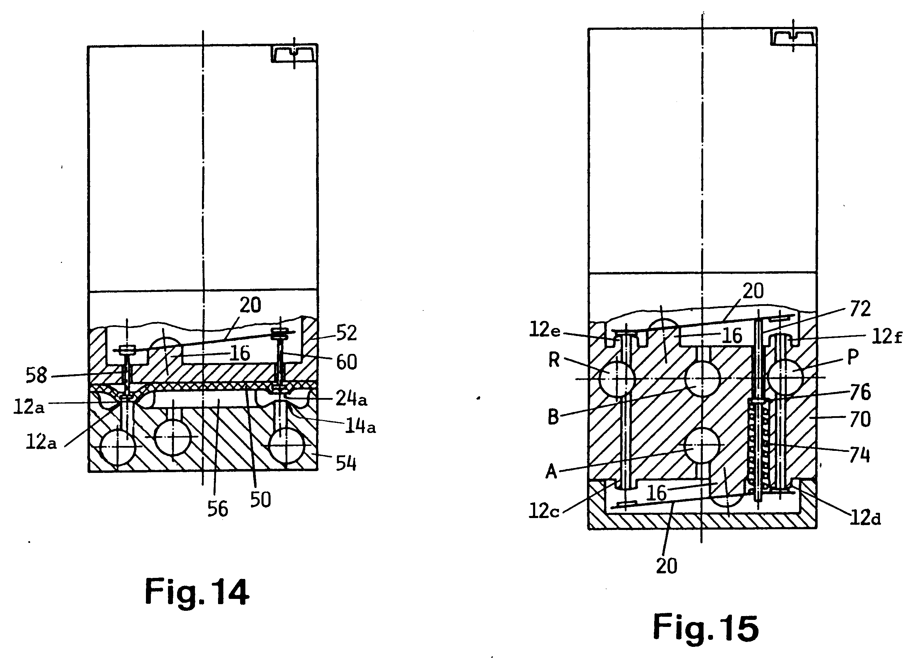

In Figur 14 ist eine weitere Ausführungsform gezeigt, die sich dadurch auszeichnet, daß der Ventilraum nahezu kein Totvolumen aufweist. Bei dieser Ausführungsform ist das Betätigungsglied 20 prinzipiell in gleicher Weise ausgebildet wie zuvor anhand der Figuren 1 bis 9 beschrieben, jedoch sind die Schließkörper nicht direkt an ihm angebracht. Vielmehr sind die Schließkörper 22a, 24a an einer Membran 50 gebildet, die an ihrem Außenrand zwischen einem dem Ventilantrieb zugewandten Gehäuseteil 52 und dem Außenrand eines zweiten Gehäuseteils 54 eingespannt, in welchem die Ventilkammer 56 gebildet ist. In dieser Ventilkammer 56 sind die beiden Ventilsitze 12a, 14a in ähnlicher Weise angeordnet wie bei den zuvor beschriebenen Ausführungsformen. Sie sind je nach Ventiltyp mit nach außen führenden Strömungskanälen verbunden. Die Schließkörper 22a, 24a werden also nicht direkt, sondern indirekt über das Betätigungsglied 20 betätigt, das zu diesem Zweck an jedem seiner Enden, an welchen bei den zuvor beschriebenen Ausführungsformen die Schließkörper befestigt sind, mit einem Betätigungsstift 58 bzw. 60 verbunden ist, der sich durch eine Öffnung des Gehäuseteils 52 erstreckt und an seinem vom Betätigungsglied 20 abgewandten Ende an der Membran 50 bzw. dem daran gebildeten Schließkörper 22a bzw. 24a angreift. Wie aus Figur 14 ersichtlich ist, ist zu diesem Zweck jeder Stift 58 bzw. 60 an seinem mit der Membran 50 verbundenen Ende mit einem Kopf ausgestattet, der in die Membran eingebettet ist.

Diese Ausführungsform zeichnet sich durch eine hermetische Trennung zwischen Ventilantrieb und Ventilkammer aus, so daß schädigende Einflüsse des durch das ventilgesteuerten Mediums auf Ventilantriebsteile vermieden werden. Überdies werden in dem Ventil keine Räume gebildet, in denen das Medium stagnieren könnte, so daß diese Ausführungsform des Ventils als nahezu "totraumarm" bezeichnet werden kann.

Bei der in Figur 15 gezeigten Ausführungsform handelt es sich um ein 4/2-Wege-Ventil, bei dem zwei Betätigungsglieder 20 der beschriebenen Art in Tandemanordnung einander gegenüberliegend antriebsmäßig gekoppelt sind. Wie aus Figur 15 ersichtlich ist, ist die Anordnung der Betätigungsglieder 20 nahezu punktsymmetrisch in bezug auf den Mittelpunkt eines Ventil-Zwischengehäuses 70, an dem vier Ventilsitze 12c, 12d, 12e und 12f gebildet sind. Jedem Paar von Ventilsitzen 12c, 12d einerseits und 12e, 12f andererseits, die in gleicher Weise wie zuvor beschrieben angeordnet sind, ist eines der Betätigungsglieder 20 zugeordnet. Während das auf der Seite des Ventilantriebs gelegene Betätigungsglied 20 über den Ventilantrieb, beispielsweise dessen Flachanker bei einer Ausführung des Antriebs entsprechend Figur 5, direkt betätigt wird, erfolgt der Antrieb des Betätigungsgliedes 20 indirekt über eine Kopplungseinrichtung, die aus einem Stift 72 und einer Druckfeder 74 besteht. Der Stift 72 stützt sich an seinem einen Ende an dem dem Ventilantrieb zugewandten Betätigungsglied 20 ab. Er erstreckt sich durch eine Bohrung des Zwischengehäuses 70, die mit einer Erweiterung zur Aufnahme der Druckfeder 74 versehen ist. Diese Druckfeder 74 stützt sich an ihrem einen Ende an einer Schulter 76 des Stiftes 72 und mit ihrem anderen Ende an dem vom Ventilantrieb abgewandten Betätigungsglied 20 ab. Im Inneren des Zwischengehäuses 70 sind die verschiedenen Strömungskanäle zu erkennen, durch welche die Ventilkammern bzw. Ventilsitzmündungen mit den äußeren Ventilanschlüssen verbunden sind.

Es ist zu erkennen, daß diese Ausführungsform trotz ihrer komplexen Schaltfunktionen sehr einfach verwirklicht werden kann, insbesondere unter Verwendung gleicher oder nahezu gleicher Betätigungsglieder 20, die auch für andere Ausführungen verwendet werden können. Ein besonderer Vorteil dieser Ausführungsform besteht darin, daß die verschiedenen Bestandteile des Ventils bausatzartig kombiniert werden können. So kann der Antrieb der in Figur 14 gezeigten Ausführungsform mit dem für die Ausführung nach Figur 15 übereinstimmen, wobei jeweils das für die gewünschte Ventilfunktion geeignete Ventilgehäuse mit Ventilsitzen, Betätigungsgliedern, Schließkörpern und Außenanschlüssen verwendet wird.

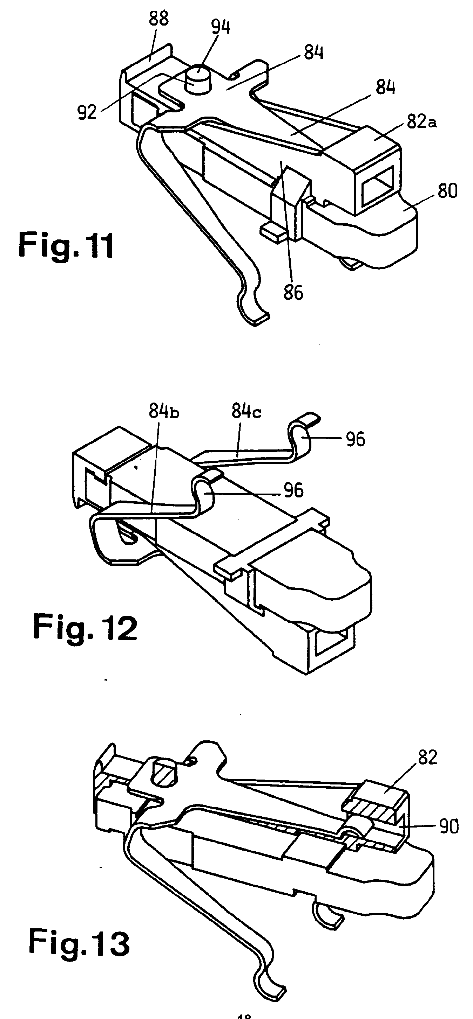

Schließlich zeigen die Figuren 11, 12 und 13 eine bevorzugte Ausführungsform eines Flachankers für einen Elektromagnet-Ventilantrieb. Ein Flachanker dieser Art kann beispielsweise bei den in den Figuren 5, 14 und 15 gezeigten Ausführungsformen verwendet werden.

Die Figur 11 zeigt den Flachanker in Perspektivansicht von der Seite des Ventilsitzes her betrachtet; Figur 12 zeigt ihn von der Seite des Ventilantriebs her betrachtet und Figur 13 zeigt ihn von der gleichen Seite wie in Figur 11, jedoch mit geschnitten gezeigter Ummantelung.

Eine Besonderheit dieser Ausführungsform besteht darin, daß der mit 80 allgemein bezeichnete Flachanker mit einem Druckübertragungselement 82 und einer Feder 84 zu einem einzigen Bauteil integriert ist. Dies ist von Vorteil, weil die Funktionsteile des Flachankers somit unverlierbar vereinigt sind, wodurch Montageprobleme vermieden werden, und zusätzliche Toleranzen zwischen Elektromagnet und Betätigungsglied vermieden werden. Dies trifft besonders dann zu, wenn wie bei der bevorzugten Ausführungsform der metallische Flachanker 80 mit einer durch Umspritzen gebildeten Kunststoffummantelung 86 versehen ist, deren integrierter Bestandteil das Druckübertragungselement 82 ist. Dieses Umspritzen bewirkt, daß sich die Dickentoleranz der metallischen Flachanker in dem kompletten Betätigungsglied nicht auswirkt und somit das Betätigungsglied nur die für den Kunststoff-Spritzfuß typischen engen Toleranzen aufweist. Auf derselben Seite wie dieses Druckübertragungselement 82 ist an dem diesem gegenüberliegenden Ende des Flachankers 80 auch eine Lagerschneide 88 angeformt, die in eine Nut im Gehäuse eingreift und so eine präzise und sehr reibungsarme Lagerung des Betätigungsglieds ermöglicht. Die Feder 84 besitzt einen mittleren Arm 84a, der an seinem einen Ende in eine rechteckförmige Öffnung 90 der Kunststoffummantelung 86 eingreift und an seinem anderen Ende eine kreisförmige Öffnung 92 aufweist, die das Aufsetzen der Feder 84 auf einen Zapfen 94 gestattet, der gleichfalls an die Kunststoffummantelung 86 angeformt ist. Dieser Zapfen 94 kann zusätzlich verstemmt oder verschweißt werden, um die Feder 84 an dem Flachanker 80 zu sichern.

Auf ihren beiden Seiten weist die Feder 84 je eine Federlamelle 84b, 84c auf, die aus der Ebene des mittleren Armes 84a zunächst abgebogen und dann zurückgebogen ist, um in einem gekrümmten Abstützteil 96 auszulaufen.

Gemäß einem weiteren besonderen Merkmal ist die aus Kunststoff bestehende Ummantelung 86 eingefärbt, wobei die jeweilige Farbe eine Information über die Dimensionierung der Feder 84 beinhaltet. Durch Verwendung eines Flachankers 80 einer bestimmten Farbe wird so die für den jeweils gewünschten Verwendungszweck geeignete Federkraft und -charakteristik bereitgestellt.

Die in den Figuren 11 bis 13 gezeigte Ausführungsform ist auch insofern vorteilhaft, als die Verwendung von Metall und Kunststoff in einem Verbundbauteil günstige Materialpaarungen ermöglicht, um minimale Reibung, lange Lebensdauer, Beständigkeit gegenüber aggressiven Medien und geringe Schaltgeräusche zu erzielen.

## Patentansprüche

1. Mehrgeventil mit zwei im Ventilgehäuse gebildeten Ventilsitzen (12, 14), deren Sitzflächen koplanar oder gegeneinander parallelverschoben sind, zwei je mit einem dieser Ventilsitze zusammenwirkenden Schließkörper (22, 24), die in gleicher Richtung zwischen Schließstellung und Öffnungsstellung beweglich sind, einem gestreckten Betätigungsglied (20), an dessen Enden die Schließkörper (22, 24) befestigt sind, und einem an dem Betätigungsglied (20) angreifenden Antrieb, wobei an das frei und ohne direkte Führung bewegliche Betätigungsglied (20) wenigstens eine elastische Lamelle (18) angeschlossen ist, die an ihrem vom Betätigungsglied (20) abgewandten Enden (18A) fest eingespannt ist und im Bereich ihres an das Betätigungsglied (20) anschließenden Endes (18B) ein Schwenklager für das Betätigungsglied (20) mit einer im Raume nicht festliegenden Schwenkachse (28) bildet, um welche das Betätigungsglied (20) wippenartig zwischen Öffnungs- und Schließstellung verschwenkbar ist, dadurch gekennzeichnet, daß die elastische Lamelle (18) im Bereich des einen, starren Endes des Betätigungsgliedes (20) einstückig an dieses angeschlossen und ihr freies Ende (18A) in einem an der Bodenfläche des Ventilgehäuses (10) zwischen den Ventilsitzen (12, 14) angeformten zapfenförmigen Vorsprung (16) verankert ist.

2. Mehrwegeventil nach Anspruch 1, dadurch gekennzeichnet, daß einer der Schließkörper (22) an einem lamellenartigen, abgekröpften Fortsatz (20A) des Betätigungsgliedes (20) befestigt ist und das Betätigungsglied (20) zwischen diesem Fortsatz (20A) und seinem Ende, an welchem der andere Schließkörper (24) befestigt ist, starr ausgebildet ist.

3. Mehrwegeventil nach einem der Ansprüche 1 und 2, dadurch gekennzeichnet, daß das Betätigungsglied (20) insgesamt lamellenförmig ausgebildet und zumindest über einen Teil seiner Längserstreckung mit wenigstens einer Aufkantung (20C, 20D) versehen ist, die dem Betätigungsglied (20) im entsprechenden Bereich seine Starrheit verleiht.

4. Mehrwegeventil nach einem der vorstehenden Ansprüche, dadurch gekennzeichnet, daß das Betätigungsglied (20) mit der elastischen Lamelle (18) als Stanzteil ausgebildet ist.

5. Mehrwegeventil nach einem der vorstehenden Ansprüche, dadurch gekennzeichnet, daß die Sitzflächen der beiden Ventilsitze (12, 14) auf verschiedener oder gleicher Höhe liegen, daß das Betätigungsglied (20) zwischen seinen beiden Enden zumindest annähernd gerade ausgebildet ist und daß die elastische Lamelle (18) von ihrer Anschlußstelle am Betätigungsglied (20) ausgehend in Richtung eines der Ventilsitze (14) zu der Verankerungsstelle (16) hin geneigt ist.

6. Mehrwegeventil nach einem der Ansprüche 1 bis 5, dadurch gekennzeichnet, daß zwei elastische Lamellen (18) an das Betätigungsglied (20) angeschlossen sind und sich in Längsrichtung sowie beiderseits desselben in geringem bestand zu je einer Verankerungsstelle (16) am Ventilgehäuse (10) erstrecken.

7. Mehrwegeventil nach Anspruch 6, dadurch gekennzeichnet, daß die beiden elastischen Lamellen (18) die Längsseiten eines Rahmenteils bilden, der das angeformte Betätigungsglied (20) umgibt und von dessen Querseiten die eine an das Betätigungsglied angeschlossen ist und die andere am Ventilgehäuse (10) eingespannt ist.

8. Mehrwegeventil nach einem der Ansprüche 3 bis 7, dadurch gekennzeichnet, daß die Aufkantung (20C) an den seitlichen Längsrändern des Betätigungsgliedes (20) gebildet ist.

9. Mehrwegeventil nach einem der vorstehenden Ansprüche, dadurch gekennzeichnet, daß die Aufkantung (20D) eine in der zur Ebene des Betätigungsgliedes (20) senkrechten Mittelebene liegende Rippe bildet.

10. Mehrwegeventil nach einem der vorstehenden Ansprüche, dadurch gekennzeichnet, daß einer der Schließkörper (22) durch die Federkraft der elastischen Lamelle (18) gegen die Sitzfläche des entsprechenden Ventilsitzes (14) beaufschlagt ist.

11. Mehrwegeventil nach Anspruch 10, dadurch gekennzeichnet, daß der Antrieb (32) drückend an dem dem anderen Schließkörper (24) benachbarten Teil des Betätigungsgliedes (20) angreift.

12. Mehrwegeventil nach Anspruch 11, dadurch gekennzeichnet, daß der Antrieb (32) durch einen Elektromagnet gebildet ist, dessen Flachanker (38) an seinem einen Endbereich am Magnetjoch (34) schwenkbar abgestützt ist, im Ruhezustand einen keilförmigen Spalt mit dem Magnetjoch bildet und an seinem anderen Endbereich über ein Druckübertragungselement (38A) durch die Kraft einer Feder (46) gegen das benachbart Ende des Betätigungsgliedes (20) drückt, um den daran befestigten Schließkörper (24) in Anlage an der zugehörigen Sitzfläche zu halten.

13. Mehrwegeventil nach einem der Ansprüche 1 bis 9, dadurch gekennzeichnet, daß der Antrieb durch ein der elastischen Lamelle (18) kraftschlüssig zugeordnetes, unter dem Einfluß einer Steuergröße verformbares Antriebselement (50) gebildet ist.

14. Mehrwegeventil nach Anspruch 13, dadurch gekennzeichnet, daß das Antriebselement (50) durch einen mit der elastischen Lamelle kombinierten, beheizbaren Bimetallstreifen, einen Streifen aus piezoelektrischem Material oder einen Streifen aus temperaturabhängig verformbarem Material gebildet ist.

15. Mehrwegeventil nach Anspruch 13 oder 14, dadurch gekennzeichnet, daß einer der Schließkörper gegen die entsprechende Sitzfläche durch die Kraft einer Rückstellfeder (46) gedrückt wird, die so dimensioniert ist, daß sie durch die Antriebskraft des Antriebselementes (50) überwindbar ist.

16. Mehrwegeventil mit wenigstens zwei im Ventilgehäuse gebildeten Ventilsitzen (12a, 14a), die koplanar oder gegeneinander parallel verschoben sind, und jeweils einem zugehörigen Schließkörper (22a, 24a) sowie einem Betätigungsglied (20), das zwischen einem Ventilantrieb und den Schließkörpern angeordnet ist, wobei das Ventilgehäuse durch eine Membran (50) in einen ersten Abschnitt (54), in dem die Ventilsitze gelegen sind, und einen zweiten Abschnitt (52), in den sich der Ventilantrieb und das Betätigungsglied (20) befinden, unterteilt ist, und wobei die Schließkörper dem jeweils zugehörigen Ventilsitz gegenüberliegend an der Membran (50) angeordnet und mit dieser verbunden sind sowie jeder Schließkörper über eine Kopplungseinrichtung (58, 60) mit dem Betätigungsglied (20) verbunden ist, dadurch gekennzeichnet, daß das Betätigungsglied (20) aus einer elastischen Lamelle gebildet ist, an deren freie Enden jeweils eine der Kopplungseinrichtungen (58, 60) angeschlossen ist und die über einen am Ventilgehäuse festgelegten Lamellenabschnitt wippernartig gelagert ist, und daß einer der Schließkörper (22a) durch die Federkraft der Lamelle gegen die Sitzfläche des entsprechenden Ventilsitzes (12a) beaufschlagt ist.

17. Mehrwegeventil nach Anspruch 16, dadurch gekennzeichnet, daß die Membran (50) an ihrem Außenrand zwischen zwei Ventilgehäuseteilen (52, 54) eingespannt ist und daß eines dieser Gehäuseteile (54) die Ventilsitze sowie die zugehörigen Strömungskanäle enthält, während das andere Gehäuseteil das Betätigungsglied und den Ventilantrieb enthält und mit Öffnungen für den Durchgang der vorzugsweise stiftartigen Kopplungseinrichtungen (58, 60) versehen ist.

18. Mehrwegeventil nach Anspruch 16 oder 17, gekennzeichnet durch ein Betätigungsglied der in den Ansprüche 1 bis 15 beschriebenen Art.

19. 4/2-Wege-Ventil mit vier Ventilsitzen und zugehörigen Schließkörpern, die durch einen gemeisamen Ventilantrieb paarweise betätigt werden, dadurch gekennzeichnet, daß je zwei Schließkörper an den beiden Enden eines von zwei jeweils als elastische Lamelle ausgebildeten Betätigungsgliedern (20) angeordnet sind, die einen am Ventilgehäuse festgelegten Lamellenabschnitt aufweisen, durch den das Betätigungsglied wippen artig gelagert ist, und daß das erste der beiden Betätigungsglieder auf der Seite des Ventilantriebs angeordnet und durch diesen betätigbar ist, während das zweite Betätigungsglied über eine Kopplungseinrichtung (72, 74) an das erste Betätigungsglied (20) angeschlossen und über dieses betätigbar ist.

20. 4/2-Wege-Ventil nach Anspruch 19, dadurch gekennzeichnet, daß die Ventilsitze paarweise zumindest annähernd punktsymmetrisch auf den beiden einander gegenüberliegenden Seiten eines Gehäuseblocks (70) angeordnet sind, in dem zu den Ventilsitzen führende Strömungskanäle ausgebildet sind, und daß die Kopplungseinrichtung durch einen Stift (72) gebildet ist, der in einer Bohrung des Gehäuseblocks verschiebbar geführt ist.

21. 4/2-Wege-Ventil nach Anspruch 20, dadurch gekennzeichnet, daß der Stift (72) sich mit seinem Ende an dem ersten Betätigungsglied (20) abstützt und sich mit einer sein zweites Ende umgebenden Druckfeder (74), die an einer Schulter des Stiftes abgestützt ist, an dem zweiten Betätigungsglied abstützt.

22. 4/2-Wege-Ventil nach einem der Ansprüche 19 bis 21, gekennzeichnet durch ein Betätigungsglied der in den Ansprüchen 1 bis 15 angegebenen Art.

23. Mehrwegeventil nach einem der Ansprüche 12 und 16 bis 21, dadurch gekennzeichnet, daß der Flachanker (80) mit dem Druckübertragungselement (82) und der Feder (84) zu einem einzigen Bauteil integriert ist.

24. Mehrwegeventil nach Anspruch 23, dadurch gekennzeichnet, daß der Flachanker (80) ein Verbundteil aus Magnetwerkstoff und Kunststoff ist, wobei der Kunststoff eine den Magnetstoff zumindest teilweise umgebende Ummantelung bildet und mit Elementen zur Befestigung der Feder (84) versehen ist.

25. Mehrwegeventil nach Anspruch 24, dadurch gekennzeichent daß die Ummantelung aus Kunststoff mit Gestaltungen (90, 94) zur kraft- und/oder formschlüssigen Aufnahme der Feder (84) versehen ist.

26. Mehrwegeventil nach einem der Ansprüche 23 bis 25, dadurch gekennzeichnet, daß die Feder (84) zwei beiderseits des Flachankers (80) angeordnete Federlamellen (84b, 84c) und einen mittleren, am Flachanker festgelegten Befestigungsarm (84a) aufweist.

27. Mehrwegeventil nach einem der Ansprüche 24 bis 26, dadurch gekennzeichnet, daß die Ummantelung an dem von dem Druckübertragungselement abgewandten Ende des Flachankers (80) und auf derselben Seite wie dieses Druckübertragungselement eine Lagerschneide (88) aufweist.

28. Mehrwegeventil nach einem der Ansprüche 24 bis 27, dadurch gekennzeichnet, daß die Ummantelung durch Umspritzen gebildet ist.

29. Mehrwegeventil nach einem der Ansprüche 24 bis 28, dadurch gekennzeichnet, daß die Ummantelung in einer Farbe eingefärbt ist, die eine Information über die Dimensionierung der Feder (84) beinhaltet.

## Revendications

1. Soupape à plusieurs voies comportant deux sièges de soupape (12, 14) formés dans le boîtier de soupape, dont les surfaces d'appui sont coplanaires ou décalées parallèlement les unes par rapport aux autres, deux corps de fermeture (22, 24) coopérant chacun avec l'un de ces sièges de soupape, et mobiles dans la même direction entre la position de fermeture et la position d'ouverture, un élément d'actionnement allongé (20), aux extrémités duquel les corps d'obturation (22, 24) sont attachés, et un entrainement engageant l'élément d'actionnement (20), au moins une lamelle élastique (18) étant raccordée à l'élément d'actionnement (20) libre et sans guidage direct, cette lamelle étant montée fixe à son extrémité (18A) opposée à l'élément d'actionnement (20) et formant dans la zone de son extrémité (18B) jointive à l'élément d'actionnement (20) un appui pivotant pour l'élément d'actionnement (20) avec un axe pivotant (28) non fixé dans l'espace, autour duquel l'élément d'actionnement (20) est pivotable en basculant entre la position d'ouverture et la position de fermeture, caractérisée en ce que la lamelle élastique (18) est raccordée en une pièce à l'élément d'actionnement (20) dans la zone de l'extrémité rigide de celui-ci, et que son extrémité libre (18A) est ancrée dans une saillie (16) en forme de tenon réalisée sur la surface de fond du boîtier de soupape (10) entre les sièges de soupape (12, 14).

2. Soupape à plusieurs voies selon la revendication 1, caractérisée en ce qu'un des corps d'obturation (22) est fixé à un prolongement (20A) coudé en forme de lamelle de l'élément d'actionnement (20) et que l'élément d'actionnement (20) est réalisé rigidement entre ce prolongement (20A) et son extrémité, à laquelle l'autre corps d'obturation (24) est fixé.

3. Soupape à plusieurs voies selon l'une des revendications 1 et 2, caractérisée en ce que l'élément d'actionnement (20) est globalement réalisé sous forme de lamelle et est pourvu sur au moins une partie de son extension longitudinale d'au moins un bord replié (20C, 20D) donnant sa rigidité à l'élément d'actionnement (20) dans la zone correspondante.

4. Soupape à plusieurs voies selon l'une des revendications précédentes, caractérisée en ce que l'élément d'actionnement (20) est réalisé en tant que pièce découpée avec la lamelle élastique (18).

5. Soupape à plusieurs voies selon l'une des revendications précédentes, caractérisée en ce que les surfaces d'appui des deux sièges de soupape (12, 14) se situent à une même hauteur ou à une hauteur différente, que l'élément d'actionnement (20) est réalisé au moins approximativement droit entre ses deux extrémités, et qu'à partir de son point de raccord sur l'élément d'actionnement (20), la lamelle élastique (18) est inclinée vers le point d'ancrage (16) en direction d'un des sièges de soupape (14).

6. Soupape à plusieurs voies selon l'une des revendications 1 à 5, caractérisée en ce que deux lamelles élastiques (18) sont raccordées à l'élément d'actionnement (20) et s'étendent en direction longitudinale ainsi que de part et d'autre de celui-ci sur une faible distance vers chacun des points d'ancrage (16) sur le boîtier de soupape (10).

7. Soupape à plusieurs voies selon la revendication 6, caractérisée en ce que les deux lamelles élastiques (18) forment les côtés longitudinaux d'un élément de cadre entourant l'élément d'actionnement formé et dont un côté transversal est raccordé à l'élément d'actionnement et l'autre côté transversal est fixé sur le boîtier de soupape.

8. Soupape à plusieurs voies selon l'une des revendications 3 à 7, caractérisée en ce que le bord replié (20C) est réalisé sur les bords longitudinaux latéraux de l'élément d'actionnement (20).

9. Soupape à plusieurs voies selon l'une des revendications 3 à 7, caractérisée en ce que le bord replié (20D) forme une rainure située dans un plan médian vertical par rapport au plan de l'élément d'actionnement (20).

10. Soupape à plusieurs voies selon l'une des revendications précédentes, caractérisée en ce que l'un des corps d'obturation (22) est sollicité par la force de ressort de la lamelle élastique (18) contre la surface d'appui du siège de soupape correspondant (14).

11. Soupape à plusieurs voies selon la revendication 10, caractérisée en ce que l'entraînement (32) engage par poussée sur la partie de l'élément d'actionnement (20) voisine de l'autre corps d'obturation (24).

12. Soupape à plusieurs voies selon la revendication 11, caractérisée en ce que l'entrainement (32) est formé par un électro-aimant dont l'armature plate (38) est appuyée à pivotement sur une de ses zones d'extrémité sur le joug magnétique (34), forme dans sa position de repos une fente en forme de coin avec le joug magnétique et presse par un élément de transmission de pression (38A), sur son autre zone d'extrémité, par la force d'un ressort (46) contre l'extrémité avoisinante de l'élément d'actionnement (20), afin de maintenir le corps d'obturation (24) y attaché en appui sur la surface d'appui attenante.

13. Soupape à plusieurs voies selon l'une des revendications 1 à 9, caractérisée en ce que l'entraînement est formé par un élément d'entrainement (50) déformable sous l'influence d'une grandeur de commande, engageant la lamelle élastique (18) avec transmission de force.

14. Soupape à plusieurs voies selon la revendication 13, caractérisée en ce que l'élément d'entraînement (50) est formé par une lame bimétallique chauffable et combinée à la lamelle élastique, par une lame en une matière piézoélectrique, ou par une lame en une matière déformable en fonction de la température.

15. Soupape à plusieurs voies selon la revendication 13 ou 14, caractérisée en ce que l'un des corps d'obturation est pressé contre la surface d'appui correspondante par la force d'un ressort de rappel (46), dont les dimensions sont telles qu'il est surmontable par la force d'entraînement de l'élément d'entraînement (50).

16. Soupape à plusieurs voies comportant au moins deux sièges de soupape (12a, 14a) formés dans le boîtier de soupape, qui sont coplanaires ou décalés parallèlement les uns par rapport aux autres, et avec à chaque fois un corps d'obturation (22a,24a) attenant, ainsi qu'un élément d'actionnement (20) agencé entre un entraînement de soupape et les corps d'obturation, le boîtier de soupape étant divisé par une membrane (50) en une première section (54), dans laquelle les sièges de soupape sont situés, et en une deuxième section (52), dans laquelle se trouvent l'entraînement de soupape et l'élément d'actionnement (20), et les corps d'obturation étant agencés sur la membrane (50) face au siège de soupape respectivement attenant et étant reliés à celle-ci, chaque corps d'obturation étant aussi relié à l'élément d'actionnement (20) à travers un dispositif de couplage (58, 60), caractérisée en ce que l'élément d'actionnement (20) est formé par une lamelle élastique, aux extrémités libres de laquelle un des dispositifs de couplage (58, 60) est respectivement raccordé et montée à basculement par une section de lamelle fixée sur le boîtier de soupape, et en ce que l'un des corps d'obturation (22a) est sollicité par la force de ressort de la lamelle contre la surface d'appui du siège de soupape (12a) correspondant.

17. Soupape à plusieurs voies selon la revendication 16, caractérisée en ce que la membrane (50) est, sur son bord externe, fixée entre deux parties du boîtier de soupape (52, 54) et que l'une de ces parties de boîtier (54) contient les sièges de soupape ainsi que les canaux d'écoulement, tandis que l'autre partie du boîtier contient l'élément d'actionnement et l'entraînement de soupape et est pourvue d'ouvertures pour le passage des dispositifs de couplage (58, 60) réalisés de préférence sous forme de chevilles.

18. Soupape à plusieurs voies selon la revendication 16 ou 17, caractérisée par un élément d'actionnement de l'espèce décrite dans les revendications 1 à 15.

19. Soupape à 4/2 voies comportant quatre sièges de soupapes et les corps d'obturation attenants, qui sont actionnés par paire par un entraînement de soupape commun, caractérisée en ce que respectivement deux corps d'obturation sont agencés chacun à l'une des extrémités d'un de deux éléments d'actionnement (20) réalisés chacun en tant que lamelle élastique et présentant une section de lamelle fixée au boîtier de soupape, par laquelle l'élément d'actionnement est monté à basculement, et en ce que le premier des deux éléments d'actionnement est agencé du côté de l'entraînement de soupape et est actionnable par celui-ci, tandis que le second élément d'actionnement est raccordé par un dispositif de couplage (72, 74) au premier élément d'actionnement (20) et est actionnable par celui-ci.

20. Soupape à 4/2 voies selon la revendication 19, caractérisée en ce que les sièges de soupape sont agencés par paire au moins sensiblement à symétrie ponctuelle sur les deux faces opposées d'un bloc de boîtier (70), dans lequel des canaux d'écoulement sont réalisés, menant aux sièges de soupape, et en ce que le dispositif de couplage est formé par une cheville (72) qui est introduite de manière coulissante dans un alésage du bloc de boîtier.

21. Soupape à 4/2 voies selon la revendication 20, caractérisée en ce que la cheville (72) s'appuye par son extrémité sur le premier élément d'actionnement (20) et par un ressort de pression (74) entourant sa deuxième extrémité, qui s'appuye sur un épaulement de la cheville, sur le deuxième élément d'actionnement.

22. Soupape à 4/2 voies selon l'une des revendications 19 à 21, caractérisée par un élément d'actionnement de l'espèce décrite dans les revendications 1 à 15.

23. Soupape à plusieurs voies selon l'une des revendications 12 et 16 à 21, caractérisée en ce que l'armature plate (80) est intégrée à l'élément de transmission de pression (82) et au ressort (84) en une pièce unique.

24. Soupape à plusieurs voies selon la revendication 23, caractérisée en ce que l'armature plate (80) est une pièce composite en une matière magnétique et synthétique, la matière synthétique formant un revêtement entourant au moins partiellement la matière magnétique et étant pourvue d'éléments pour attacher le ressort (84).

25. Soupape à plusieurs voies selon la revendication 24, caractérisée en ce que le revêtement en matière synthétique est pourvu de structures (90, 94) pour recevoir le ressort (84) de façon complémentaire et/ou de façon à transmettre des forces.

26. Soupape à plusieurs voies selon l'une des revendications 23 à 25, caractérisée en ce que le ressort (84) présente deux lamelles de ressort (84b, 84c) agencées de part et d'autre de l'armature plate (80) ainsi qu'un bras de fixation attaché sur l'armature plate (84a).

27. Soupape à plusieurs voies selon l'une des revendications 24 à 26, caractérisée en ce que le revêtement présente un couteau d'articulation (88) à l'extrémité de l'armature plate (80) opposée à l'élément de transmission de pression et sur la même face que cet élément de transmission de pression.

28. Soupape à plusieurs voies selon l'une des revendications 24 à 27, caractérisée en ce que le revêtement est réalisé par extrusion.

29. Soupape à plusieurs voies selon l'une des revendications 24 à 28, caractérisée en ce que le revêtement est teinté dans une couleur qui contient une information sur la force du ressort (84).


## Claims

1. Multi-way valve comprising two valve seats (12, 14) formed in the valve housing whose seat surfaces are coplanar or parallel and displaced with respect to each other, two closing bodies (22, 24) cooperating with each of the valve seats respectively, the closing bodies being movable in the same direction between a closing position and an opening position, an elongated actuating member (20) whose ends the closing bodies (22, 24) are attached to, and a drive engaging the actuating member (20), at least one elastic lamella (18) being connected to the actuating member (20) which is movable freely and without direct guide, said lamella being firmly gripped at its end (18A) facing away from actuating member (20), said lamella further forming, in the region of its end (18B) adjoining the actuating member (20), a swivel bearing for the actuating member (20) with a swivel axis (28) not being fixed in space and around which the actuating member (20) may swivel in rocker-like manner between the opening and closing positions, characterized in that the elastic lamella (18) is integrally connected to the actuating member (20) in the region of the one, rigid end of said actuating member and that its free end (18A) is fixed to a tap-like projection (16) formed at the bottom surface of the valve housing (10) between the valve seats (12, 14).

2. Multi-way valve according to claim 1, characterized in that one of the closing bodies (22) is attached to a lamella-like bent-off extension (20A) of the actuating member (20), and that the actuating member (20) is formed to be rigid between this extension (20A) and its end to which the other closing body (24) is attached.

3. Multi-way valve according to any of claims 1 and 2, characterized in that the actuating member (20) is formed to be lamella-shaped as a whole and, at least over one portion of its longitudinal extension, is provided with at least one region (20C, 20D) being bent at right angles which confers rigidity to the actuating member (20) in the corresponding region.

4. Multi-way valve according to any one of the preceding claims, characterized in that the actuating member (20) together with the elastic lamella (18) is formed as a punched part.

5. Multi-way valve according to any one of the preceding claims, characterized in that the seat surfaces of the two valve seats (12, 14) are situated at different or same level, that the actuating member (20) is formed to be at least approximately straight between its two ends and that the elastic lamella (18) is inclined from the location of its connection to the actuating member (20) in the direction of one of the valve seats (14) towards the fixing location (16).

6. Multi-way valve according to any of claims 1 to 5, characterized in that two elastic lamellas (18) are connected to the actuating member (20) and extend in the longitudinal direction and at both sides of the member to be slightly spaced with respect to one fixing location (16) at the valve housing (10) respectively.

7. Multi-way valve according to claim 6, characterized in that the two elastic lamellas (18) form the longitudinal sides of a frame portion surrounding the integrally formed actuating member (20) and one of its transverse sides being connected to the actuating member and the other being gripped at the valve housing (10).

8. Multi-way valve according to any of claims 3 to 7, characterized in that the region (20C) bent at right angles is formed at the lateral edges of the actuating member (20).

9. Multi-way valve according to any of claims 3 to 7, characterized in that the region (20D) which is bent at right angles forms a rib being situated in the middle plane perpendicular with respect to the plane defined by the actuating member (20).

10. Multi-way valve according to any of the preceding claims, characterized in that one of the closing bodies (22) is applied against the seat surface of the corresponding valve seat (14) through the spring tension exerted by the elastic lamella (18).

11. Multi-way valve according to claim 10, characterized in that the drive (32) engages in a pushing manner the portion of actuating member (20) which is situated in the vicinity of the other closing body (24).

12. Multi-way valve according to claim 11, characterized in that the drive (32) is formed by an electromagnet whose flat armature (38) is supported with its one end region at the magnet yoke (34) to be swivelling, said armature forming, in neutral position, a wedge-shaped slot together with the magnet yoke and pressing at its other end region against the adjoining end of the actuating member (20) by means of spring tension (46) via a pressure transmission element (38A) in order to keep the closing body (24) attached to the member in contact with the associated seat surface.

13. Multi-way valve according to any of claims 1 to 9, characterized in that the drive is formed by a drive element (50) which may be deformed under the influence of a control value and which is allocated to the elastic lamella (18) to form a frictional connection.

14. Multi-way valve according to claim 13, characterized in that the drive element (50) is formed by a bimetallic strip combined with the elastic lamella which may be heated, by a strip made of piezoelectric material or a strip of a material which may be deformed in dependence upon temperature.

15. Multi-way valve according to claims 13 or 14, characterized in that one of the closing bodies is pressed against the corresponding seat surface by the force exerted by a return spring (46) which is dimensioned so as to be surmountable by the drive force of the drive element (50).

16. Multi-way valve comprising at least two valve seats (12a, 14a) formed in the valve housing, said valve seats being coplanar or parallel and displaced with respect to each other and each having an associated closing body (22a, 24a) and an actuating member (20) disposed between a valve drive and the closing bodies, the valve housing being subdivided by a diaphragm (50) into a first region (54) wherein the valve chambers are situated and a second region (52) wherein the valve drive and the actuating member (20) are located, and the closing bodies being disposed on the diaphragm (50) to be opposite the respective associated valve seat and connected to the diaphragm, and each closing body being connected to the actuating member (20) via a coupling device (58, 60), characterized in that the actuating member (20) is formed of an elastic lamella to whose free ends one of the coupling devices (58, 60) is connected respectively and which is supported to be rocker-like through a lamella section fixed to the valve housing, and that one of the closing bodies (22a) is biased by the spring tension of the lamella against the seat surface of the corresponding valve seat (12a).

17. Multi-way valve according to claim 16, characterized in that the diaphragm (50) is gripped between two valve chamber portions (52, 54) at its outer edge and that one of these chamber portions (54) contains the valve seats as well as the associated flow channels, while the other chamber portion contains the actuating member and the valve drive and is provided with apertures for the passage of the preferably pin-like coupling devices (58, 60).

18. Multi-way valve according to claim 16 or claim 17, characterized by an actuating member of the kind specified in claims 1 to 15.

19. 4/2-way valve comprising four valve seats and associated closing bodies being actuated in pairs by a common valve drive, characterized in that two closing bodies respectively are disposed at both ends of one of two actuating members (20) formed as an elastic spring lamella, respectively, said actuating members comprising a lamella section fixed to the valve housing and by means of which the actuating member is supported to be rocker-like, and that the first of the two actuating members is disposed on the side of the valve drive and actuatable by the latter, while the second actuating member is connected to the first actuating member (20) via a coupling device (72, 74) and actuatable by the first member.

20. 4/2-way valve according to claim 19, characterized in that the valve seats are disposed in pairs to be at least approximately point-symmetric on the two sides of a casing block (70) facing each other in which flow channels leading to the valve seats are formed, and that the coupling device is formed by a pin (72) which is guided to be slidable in a bore of the casing block.

21. 4/2-way valve according to claim 20, characterized in that the pin (72) has one end bearing on the first actuating member (20) and a second end surrounded by a pressure spring (74) bearing on a shoulder of the pin and through which the pin bears on the second actuating member.

22. 4/2-way valve according to any of claims 19 to 21, characterized by an actuating member of the kind specified in claims 1 to 15.

23. Multi-way valve according to any of claims 12 and of 16 to 21, characterized in that the flat armature (80) is integrated together with the pressure transmission element (82) and the spring (84) to form a single component.

24. Multi-way valve according to claim 23, characterized in that the flat armature (80) is a composite component made of magnet material and synthetic material, the synthetic material forming an envelope surrounding the magnet material at least in part and being provided with elements for attaching the spring (84).

25. Multi-way valve according to claim 24, characterized in that the envelope of synthetic material is provided with configurations (90, 94) for taking up the spring (84) in force transmission and/or form-fit manner.

26. Multi-way valve according to any of claims 23 to 25, characterized in that the spring (84) comprises spring lamellas (84b, 84c) disposed at both sides of the flat armature (80) and a middle attachment arm (84a) fixed to the flat armature.

27. Multi-way valve according to any of claims 24 to 26, characterized in that the envelope comprises a support edge (88) at the end of the flat armature (80) facing away from the pressure transmission element and on the side of this pressure transmission element.

28. Multi-way valve according to any of claims 24 to 27, characterized in that the envelope is formed by extrusion-molding.

29. Multi-way valve according to any of claims 24 to 28, characterized in that the envelope is coloured in a colour implying information about the dimensioning of the spring (84).

# Fig. 1

# Fig. 2

# Fig. 3

14

## Fig. 4

## Fig. 6

## Fig. 7

# Fig. 5

Fig. 8

Fig. 9

Fig. 10

Fig. 11

Fig. 12

Fig. 13

Fig.15

Fig.14